# EUROPEAN PATENT SPECIFICATION

(11) **EP 2 856 756 B1**
(45) Date of publication and mention of the grant of the patent: **18.08.2021**
(21) Application number: 13740058.6
(22) Date of filing: 30.05.2013
(51) Int. Cl.: H04N 7/18, A61B 5/00

(54) **DEVICE INTENDED FOR LOOKING AT HIS/HER OWN WHOLE BODY WITHOUT TURNING THE HEAD.**
VORRICHTUNG ZUR INSPEKTION DES EIGENEN KÖRPERS OHNE KOPF VERDREHEN
APPAREIL D'OBSERVATION DE SON PROPRE CORPS SANS TOURNER LA TÊTE

(30) Priority: 04.06.2012 IT AL20120012
(43) Date of publication of application: 08.04.2015
(73) Proprietor: Molinari, Enzo, 15073 Castellazzo Bormida (AL) (IT)
(72) Inventor: Molinari, Enzo, 15073 Castellazzo Bormida (AL) (IT)
(74) Representative: Karaghiosoff, Giorgio Alessandro
(86) International application number: PCT/IB2013/054474
(87) International publication number: WO 2013/182958

(56) References cited:
- DE-U1- 20 308 410
- US-A1- 2010 177 183
- US-B1- 7 986 369
- None

## Description

The object of the present patent application is to allow and simplify the operation for looking at the various areas of the body, without turning the head.

This is particularly useful for the daily care of one's body, for example for combing one's hair: by simply looking at himself/herself ahead as if one is looking in a normal mirror without turning the head it is possible to see the back, or the upper or side part of the head depending on one's needs; another example is that for cleaning the ears, even in this case by simply looking ahead as if one is looking in a normal mirror without turning the head it is possible to see the ears; it will be the same for shaving oneself or for looking at one's back, etc... Another object is for example when wearing a dress: usually it is an effort to look at the back of the body even in this case with the device of the present patent application, by looking at ourselves ahead as if we are looking in a normal mirror without turning the head it will be possible therefore to see partially or completely the back area of the body.

Again the device of the present patent application will be useful and comfortable for example for looking at any part of one's body even only for a medication at a location that before we were not able to see even by the aid of mirrors or the like, even in this case by looking at ourselves ahead as if we are looking in a normal mirror without turning the head it will be possible to see.

Another object is to provide a practical, simple and advantageous solution for the comfort and quickness of use even when a normal mirror or the like is not able to let you look at yourself.

These objects are achieved by the device for displaying the external changes of one's body, subject matter of the present invention, which comprises a led monitor or the like, which monitor has an appendage that at its end is provided with at least one videocamera or the like, such to be directed on the part of the body that one desires to look at, such to display on said monitor said part of the body.

According to a possible embodiment the appendage is composed of an elongated member made of flexible material, but at the same time it is rigid enough to self-support itself.

According to a further embodiment it is possible to provide one or more appendages connected to the same monitor.

For example the appendage can be composed of a filiform element of the rod type or the like.

A possible variant embodiment provides a wireless system, for transmitting data between said videocamera and said monitor.

In this case the videocamera is removable from the led monitor, said videocamera being supported by suction cups or the like.

According to the invention, said appendage is provided as extendable in length.

According to the invention, the appendage is composed of a telescopic element.

As an alternative the monitor can be replaced by a plasma display or the like, with any shape and size.

According to a further embodiment the videocamera is composed of a miniature camera or the like.

Advantageously the device of the present invention may have systems for widening or reducing the image displayed on said monitor.

According to a possible embodiment, the monitor is composed of a black-and-white, and/or color and/or 3D and/or 4D monitor.

In order to improve the displaying of the filmed image, the videocamera can have a source generating a light signal.

US 2010/177183 A1 discloses a device for the personal inspection of the hard to view areas of human body. D1 discloses an elongated tubular element connected to a flexible tubular element having a camera attached to its end. The elongated tubular element is connected to a display from the other end in order to transmit the video data from the camera to the display.

US 7 986 369 B1 relates to a camera that is coupled to exterior end of rings with electric cable extending through the rings so as to connect personal computer and camera.

These and other characteristics of the device of the present invention and the advantages deriving therefrom will be clear from the following detailed description of a preferred embodiment, as a nonlimiting example, shown with reference to the annexed drawing illustrations, wherein:
Fig.1 reduced scale, front view of the digital device according to the device of the present invention, shown in the standby position;
Fig.2 is a view of the end 310 of the flexible appendage 410 shown in figs. 1 and 3
Fig.3 is the same digital device of fig.1 but it is shown in an operating condition.

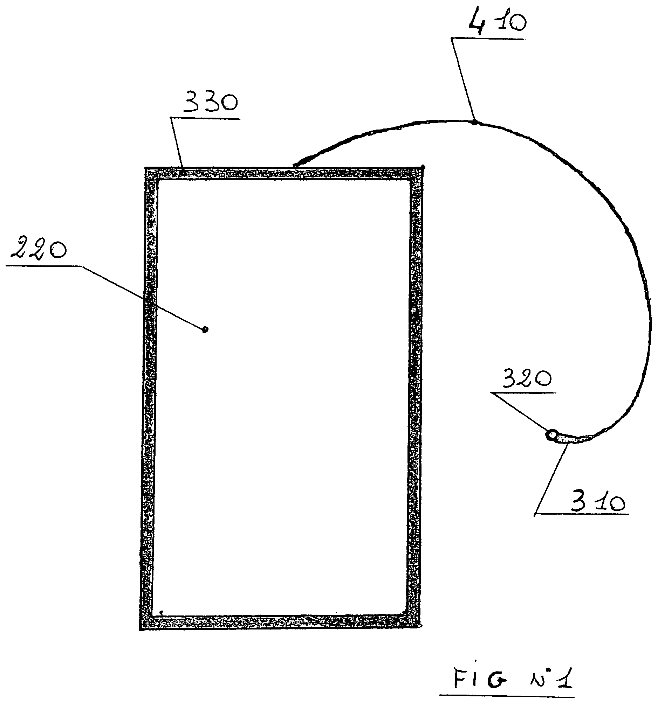

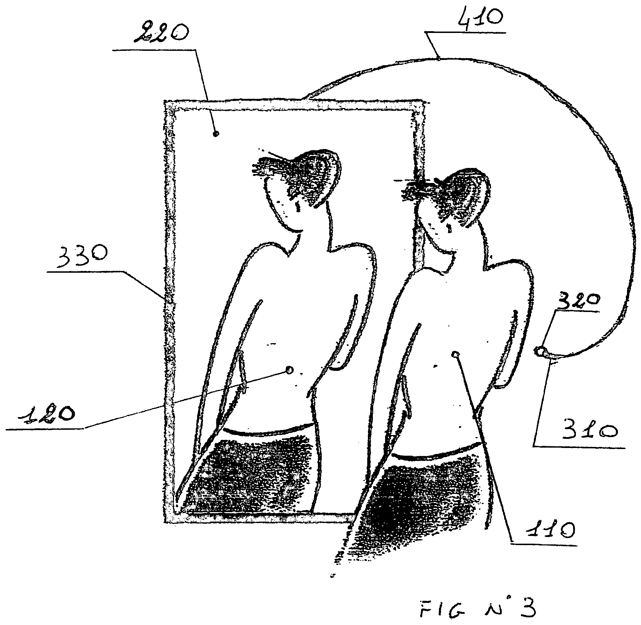

With reference to figures 1 and 3 the digital device 220 according to the device of the present invention, uses a led monitor instead of a normal mirror or a reflecting surface commonly used for mirrors.

Still with reference to figures 1 and 3, the digital device 220 according to the device of the present invention has an appendage 410 that, in the shown example, comes out of the frame 330 as pointed out in figures 1 and 3.

Said appendage 410 is, in the shown example, a flexible element such that it is possible to move it, but at the same time it is rigid enough to self-support itself, along enough such that it can be oriented in any desired positions.

The appendage 410 is provided at its outer end 31 with a videocamera 320.

Fig.3 shows a not limitative example, of a person 110, that after having oriented the videocamera 320 on his/her back, has the possibility of looking at it 120 on the led monitor 220, comfortably looking ahead without turning the head.

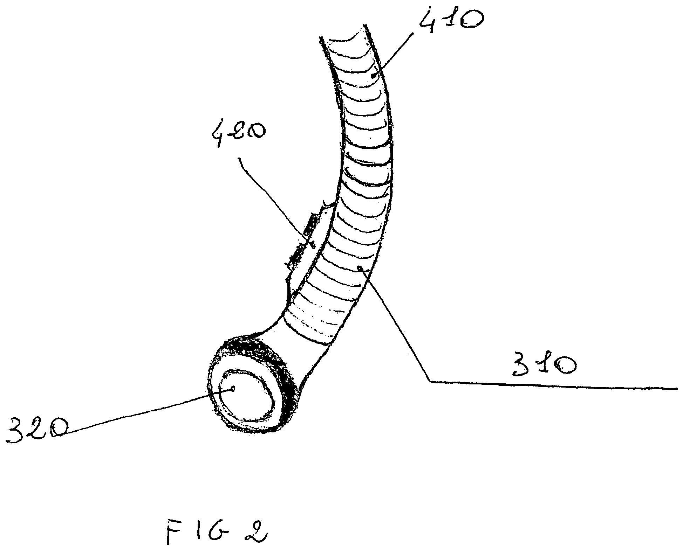

Fig.2 shows a non limitative example for applying command keys 420, such as zoom or on, off, etc... to the flexible element 410.

Therefore it results the utility of the device of the present invention when one desires to look at himself/herself, in any part of the body in the mirror, comfortably by looking ahead without turning the head fig.3.

According to not shown embodiments, the appendage 410 can also be a filiform element (for example rod or the like) anyway suitable for the purpose.

According to another not shown embodiment it is possible to provide more than one flexible (or not flexible) appendage 410 coming out of (or not coming out of) any part of the led monitor.

Still according to another not shown embodiment instead of a led monitor 220, it is possible to use a plasma display or the like, with any size and shape anyway suitable for the purpose.

Still according to another not shown embodiment instead of the videocamera 320 it is possible to provide a miniature camera or the like anyway suitable for the purpose.

In another not shown embodiment the device of the present invention can be provided with a wireless system, such to have one or more videocameras detached from the monitor, supported by suction cups of the like, anyway suitable for the purpose.

## Claims

1. Device for displaying external changes of one's body, which comprises a led monitor or a plasma monitor, the monitor has an appendage that at its end provides at least one videocamera, such to be oriented on the body part that one desires to look at, such to display said body part on said monitor, **characterized in that** said appendage is a telescopic element extendable in length.

2. Device for displaying external changes of one's body, according to the preceding claim, **characterized in that** the appendage is made of a flexible material, but at the same time it is rigid enough to self-support itself.

3. Device for displaying external changes of one's body, according to the preceding claims, **characterized in that** said monitor has more than one appendages with videocamera.

4. Device for displaying external changes of one's body, according to the preceding claims, **characterized in that** it provides a wireless system, the videocamera being provided as removable from the monitor, said videocamera being supported by suction cups.

5. Device for displaying external changes of one's body, according to the preceding claims, **characterized in that** the videocamera is composed of a miniature camera.

6. Device for displaying external changes of one's body, according to the preceding claims, **characterized in that** the device has systems for widening or reducing the image displayed on said monitor.

7. Device for displaying external changes of one's body, according to the preceding claims, **characterized in that** the monitor is composed of a black-and-white, or color or 3D or 4D monitor.

8. Device for displaying external changes of one's body, according to the preceding claims, **characterized in that** the videocamera has a source generating a light signal.

## Patentansprüche

1. Vorrichtung zum Anzeigen äußerer Veränderungen des eigenen Körpers, die einen LED-Bildschirm oder einen Plasma-Bildschirm umfasst, wobei der Bildschirm ein Ansatzteil aufweist, das an seinem Ende mindestens eine Videokamera aufweist, die auf den Körperteil ausgerichtet werden kann, den man ansehen möchte, um den Körperteil auf dem Bildschirm anzuzeigen, **dadurch gekennzeichnet, dass** das Ansatzteil ein in der Länge ausziehbares Teleskopelement ist.

2. Vorrichtung zur Anzeige äußerer Veränderungen des eigenen Körpers nach dem vorhergehenden Anspruch, **dadurch gekennzeichnet, dass** das Ansatzteil aus einem flexiblen Material hergestellt ist, aber gleichzeitig steif genug ist, um sich selbst zu tragen.

3. Vorrichtung zur Anzeige äußerer Veränderungen des eigenen Körpers nach einem der vorhergehenden Ansprüche, **dadurch gekennzeichnet, dass** der Bildschirm mehr als ein Ansatzteil mit Videokamera aufweist.

4. Vorrichtung zur Anzeige äußerer Veränderungen des eigenen Körpers nach den vorhergehenden Ansprüchen, **dadurch gekennzeichnet, dass** sie ein drahtloses System umfasst, wobei die Videokamera vom Bildschirm abnehmbar vorgesehen ist, wobei die Videokamera durch Saugnäpfe gehalten wird.

5. Vorrichtung zur Anzeige äußerer Veränderungen des eigenen Körpers nach einem der vorhergehenden Ansprüche, **dadurch gekennzeichnet, dass** die Videokamera aus einer Mikrokamera besteht.

6. Vorrichtung zur Anzeige äußerer Veränderungen des eigenen Körpers nach einem der vorhergehenden Ansprüche, **dadurch gekennzeichnet, dass** die Vorrichtung Systeme zur Vergrößerung oder Verkleinerung des auf dem Bildschirm dargestellten Bildes aufweist.

7. Vorrichtung zur Anzeige äußerer Veränderungen des eigenen Körpers nach einem der vorhergehenden Ansprüche, **dadurch gekennzeichnet, dass** der Bildschirm aus einem Schwarz-Weiß- oder Farb- oder 3D- oder 4D-Bildschirm besteht.

8. Vorrichtung zur Anzeige äußerer Veränderungen des eigenen Körpers nach einem der vorhergehenden Ansprüche, **dadurch gekennzeichnet, dass** die Videokamera eine ein Lichtsignal erzeugende Quelle aufweist.

## Revendications

1. Dispositif pour afficher les changements externes du corps d'une personne, qui comprend un moniteur à LED ou un moniteur à plasma, le moniteur a un appendice qui, à son extrémité, prévoit au moins une caméra vidéo, de sorte à être orienté sur la partie du corps que l'on désire regarder, de sorte à afficher ladite partie du corps sur ledit moniteur, **caractérisé en ce que** ledit appendice est un élément télescopique extensible en longueur.

2. Dispositif pour afficher les changements externes du corps d'une personne selon la revendication précédente, **caractérisé en ce que** l'appendice est réalisé d'un matériau flexible, mais est en même temps assez rigide que pour s'auto-soutenir.

3. Dispositif pour afficher les changements externes du corps d'une personne selon les revendications précédentes, **caractérisé en ce que** ledit moniteur présente plus d'un appendice avec caméra vidéo.

4. Dispositif pour afficher les changements externes du corps d'une personne selon les revendications précédentes, **caractérisé en ce qu'**il prévoit un système sans fil, la caméra vidéo étant prévue amovible du moniteur, ladite caméra vidéo étant supportée par des ventouses.

5. Dispositif pour afficher les changements externes du corps d'une personne selon les revendications précédentes, **caractérisé en ce que** la caméra vidéo est composée d'une caméra miniature.

6. Dispositif pour afficher les changements externes du corps d'une personne selon les revendications précédentes, **caractérisé en ce que** le dispositif présente des systèmes d'agrandissement ou de réduction de l'image affichée sur ledit moniteur.

7. Dispositif pour afficher les changements externes du corps d'une personne selon les revendications précédentes, **caractérisé en ce que** le moniteur est composé d'un moniteur en noir et blanc, ou à couleurs ou 3D ou 4D.

8. Dispositif pour afficher les changements externes du corps d'une personne selon les revendications précédentes, **caractérisé en ce que** la caméra vidéo présente une source générant un signal lumineux.
